(19) Europäisches Patentamt
European Patent Office
Office européen des brevets

(11) **EP 1 067 512 B1**

(12) **EUROPEAN PATENT SPECIFICATION**

(45) Date of publication and mention
of the grant of the patent:
**26.12.2007  Bulletin 2007/52**

(51) Int Cl.:
*G10L 15/18* *(2006.01)*

(21) Application number: **99113265.5**

(22) Date of filing: **08.07.1999**

(54) **Method for determining a confidence measure for speech recognition**

Verfahren zum Ermitteln eines Zuverlässigkeitsmasses für die Spracherkennung

Procédé de détermination d'une mesure de fiabilité pour la reconnaissance de parole

(84) Designated Contracting States:
**DE FR GB**

(43) Date of publication of application:
**10.01.2001  Bulletin 2001/02**

(73) Proprietor: **Sony Deutschland GmbH**
**10785 Berlin (DE)**

(72) Inventors:
• **Marasek, Krzysztof,**
**c/o Sony Deutschland GmbH**
**70736 Fellbach (DE)**
• **Goronzy, Silke,**
**c/o SonyDeutschland GmbH**
**70736 Fellbach (DE)**
• **Kompe, Ralf,**
**c/o Sony Deutschland GmbH**
**70736 Fellbach (DE)**

(74) Representative: **Müller - Hoffmann & Partner**
**Patentanwälte,**
**Innere Wiener Strasse 17**
**81667 München (DE)**

(56) References cited:
**US-A- 5 857 173**

• **RIVLIN Z ET AL: "A phone-dependent confidence measure for utterance rejection" IEEE INTERNATIONAL CONFERENCE ON ACOUSTICS, SPEECH, AND SIGNAL PROCESSING - PROCEEDINGS. (ICASSP),US, NEW YORK, IEEE, vol. CONF. 21, page 515-517 XP002092085 ISBN: 0-7803-3193-1**

• **MYOUNG-WAN KOO ET AL: "A new decoder based on a generalized confidence score" PROCEEDINGS OF THE 1998 IEEE INTERNATIONAL CONFERENCE ON ACOUSTICS, SPEECH AND SIGNAL PROCESSING, ICASSP '98 (CAT. NO. 98CH36181), PROCEEDINGS OF THE 1998 IEEE INTERNATIONAL CONFERENCE ON ACOUSTICS, SPEECH AND SIGNAL PROCESSING, SEATTLE, WA, USA, 12-1, pages 213-216 vol.1, XP002123828 1998, New York, NY, USA, IEEE, USA ISBN: 0-7803-4428-6**

• **SUNIL S ET AL: "HMM based fast keyworld spotting algorithm with no garbage models" PROCEEDINGS OF ICICS, 1997 INTERNATIONAL CONFERENCE ON INFORMATION, COMMUNICATIONS AND SIGNAL PROCESSING. THEME: TRENDS IN INFORMATION SYSTEMS ENGINEERING AND WIRELESS MULTIMEDIA COMMUNICATIONS (CAT. NO.97TH8237), PROCEEDINGS OF 1ST INTERNATIONAL CON, pages 1020-1023 vol.2, XP002123830 1997, New York, NY, USA, IEEE, USA ISBN: 0-7803-3676-3**

• **ANASTASAKOS A ET AL: "Duration modeling in large vocabulary speech recognition" 1995 INTERNATIONAL CONFERENCE ON ACOUSTICS, SPEECH, AND SIGNAL PROCESSING. CONFERENCE PROCEEDINGS (CAT. NO.95CH35732), 1995 INTERNATIONAL CONFERENCE ON ACOUSTICS, SPEECH, AND SIGNAL PROCESSING, DETROIT, MI, USA, 9-12 MAY 1995, pages 628-631 vol.1, XP002123829 1995, New York, NY, USA, IEEE, USA ISBN: 0-7803-2431-5**

EP 1 067 512 B1

## Description

The present inversion relates to a method for recognizing speech and in particular to a method for determining confidence of recognized speech.

Recently, automatic speech recognition (ASR) has become more and more important because in many technical and commercial activities methods and devices for automatic speech recognition have been used to realize interfaces between a human user and the technical equipment so as to reduce the burden of direct personal assistance and support or to simplify the usage and application of the equipment, for instance.

Methods and devices for automatic speech recognition in the state-of-the-art utilize in general at least three stages of processing.

First of all in an input stage a speech phrase is received as an analog acoustical input signal. Then the human speech input is converted into an electrical equivalent which is representative for said human speech input signal. From a pre-processed representing signal of the electrical equivalent distinct features are derived. These features may be built up as so called speech elements which are also called hypothesis speech elements and which are chosen out of a given set of possible speech elements.

These speech elements may be phones, phonemes, syllables, words, and/or sequences thereof.

Based on the sequence of speech elements, state-of-the-art methods for recognizing speech then generate a sequence of words which is most probably representative for the received input speech phrase.

As common speech recognizing methods and systems are still far from being perfect, the so called confidence measures (CM) have been introduced so as to increase the reliability of these methods and in particular to provide the user and applicant of such systems and methods with a measure which describes the reliability and/or the probability that the found and recognized sequence of words is correct. The confidence measures therefore judge the reliability of the recognized phrase.

If the recognized result is considered as being unreliable - meaning that the probability that it was recognized is low - then it is rejected in accordance with the confidence measure of the recognized word or utterance. In contrast, if the probability that the distinct word or utterance has been recognized correctly is high, it is accepted and the further processing goes on as usual.

An essential observation within the concept of CM is that a misrecognition causes a false labeling of speech elements or phones in the output of the recognizing process. This is in particular true when the normally expected duration distribution is distorted by distinct properties of the pronunciation of the actual speaker.

Especially when the vocabulary is very large in an isolated word recognition system, the probability that words are confusable increases. This observation makes it difficult to recognize words or utterances correctly. In particular in continuous speech recognition systems, the same problem arises. In the case of huge vocabulary it is even worse.

During the past years it has become necessary to equip known speech recognition systems with the ability to understand spontaneous speech, for example in automatic telephone services, time schedule information services, or the like. In these systems, it is still a problem that the utterances of the speakers may be unpredictable. Although equipping state-of-the-art recognition systems with the ability of understanding spontaneous speech provides a user-friendly user-interface, the problem in connection with the handling of out of vocabulary words (OOV), influencies and acoustical mismatches increase. Additionally, the customers and applicants of said technology are unaware of these technological limitations. Therefore, the users expect the system to work properly, even if their response includes these disfluencies, hesitations, false starts, and intermittent sounds like hm's and ah's, or the like.

All these factors and influences lead to an increased error rate. As a consequence, the customers and users of such systems and methods for recognizing speech are not satisfied with the quality of the recognition result.

In order to make the output of the recognizing process more believable and more reliable, the so called confidence measures (CM) have been introduced and used. These CMs use additional and/or external knowledge which is developed before/during the recognition process per se.

Different kinds of confidence measures for the judgment of recognized speech have been developed. They cover the use of explicit alternate, anti-keyword, garbage, junk, or filler models together with logarithmic likelihood ratio (LR) tests, for instance. On the other hand, it is known in the art to use a set of features - e. g. acoustic scores, lattice densities, likelihoods on a word, on a phone, or on a frame level - that have been collected during recognition. Furthermore, several statistical methods such as Bayessian classifiers and linear discriminent analysis, as well as artificial neural networks, decision trees, and/or generalized linear models have been used for confidence measure.

A major drawback of all these known methods for generating confidence measures is that they are hard to implement in real time automatic speech recognition systems and that they imply a large burden of computer resources and computation time.

Document Rivlin Z et al: "Phone-dependent confidence measure for utterance rejection" relates to a proposal for an acoustic confidence measure for acceptance/rejection of recognition hypotheses for continuous speech utterances and introduces the incorporation of durational information in confidence scoring, i.e., rather than just normalizing a duration measure, in order to form an acoustic confidence measure for word-string hypotheses.

US 5.857,173 relates to a pronunciation measurement device and method, wherein a voice input is received and processed, a look-up operation is performed in order to obtain a predetermined model for the voice input, a model is applied to the voice input by comparing the voice input phonemes with model phonemes in order to provide a score, the score is analyzed with respect to a score for a predetermined speaker, wherein a comparison of the duration aspects is performed, for instance between voice input phonemes and model phonemes, and wherein a result is indicated including the presentation of a confidence measure for the duration of at least one voice input phoneme. The disclosed system is adapted to determine a score indicating the quality of the pronunciation with respect to a predetermined word. The system therefore necessarily knows the word a user pronounces.

Document Anastanos A et al: "Duration modeling in large vocabulary speech recognition" presents a study of different methods for phoneme duration modeling in large vocabulary speech recognition systems. The employing of phoneme duration and the effect of context, speaking rate, and lexical stress in the duration of phoneme segments in a large vocabulary speech recognition system are investigated.

It is therefore an object of the present invention to provide a method for recognizing speech which provides a robust and reliable measure to classify the recognition quality.

This object is achieved by the inventive method for recognizing speech according to the wording of claim 1. Preferred embodiments of the inventive method are within the scope of the dependent claims.

The inventive method for recognizing speech comprises the steps of receiving a speech phrase, generating a representing signal which is representative for said speech phrase, determining from said representing signal at least a first sequence of speech elements - in particular out of a given set of possible speech elements - generating for each speech element and/or for sub-sets/sub-sequences of speech elements a duration measure. Furthermore, according to the inventive method, at least a first sequence of words which is most probably corresponding to said speech phrase is generated from said speech elements and/or output. The inventive method also includes the step of generating and/or outputting a confidence measure which is at least based on said duration measures and which is representative for the probability of a correct recognition of the speech elements, said sequence of words and/or therefore of the received speech phrase. In accordance with the inventive method each of said duration measures comprises information at least on whether or not said elements and/or said sub-sets/sub-sequences of speech elements within said representing signal are compatible to a given and pre-defined duration model.

It is therefore essential for the inventive method to first receive a speech phrase as an analog acoustical input signal which is then transformed within a pre-processing step to a representing signal. This pre-processing step may comprise the step of filtering, digitizing, and/or Fourier transforming or the like. The representing signal is the basis for the further steps of processing.

Thereafter, based on the representing signal, at least a first sequence of speech elements is generated. It is also possible to generate a variety or a set of candidates for sequences of speech elements. The speech elements are chosen from a given set of possible speech elements. Each speech element may be a phone, a phoneme or acoustical fragment, a syllable, a word, and/or a sequence and combination thereof.

According to the inventive method, for each speech element and/or for sub-sets/sub-sequences of speech elements within said representing signal, a respective duration measure is generated. The duration measures are descriptive for the duration of the respective speech element and/or sub-sets/sub-sequences of speech elements and in particular they may be representative for the fact on whether or not the respective duration is compatible to a given and pre-defined duration model, i. e. a model for the length or duration of their respective pronunciation and/or occurence.

Prior to recognition a statistical distribution of the duration for each of said possible speech elements and/or sequences thereof is determined and/or analyzed and that said analysis is then included as a composing part into said duration model. It is an advantage for speaker dependent or speaker adapted systems that based upon naturally spoken speech the actual durations including the speaker's specific pronunciations can be involved into said duration model.

During the determination of the statistical distribution of the durations the method is provided with training data as an input speech signal together with a distinct correct transcription assigned to said input speech signal. The recognizing process is then forced to recognize the correct transcription. Therefore, as a training particular text including even complicated pronunciations are pre-determined and the specific pronunciation of that particular text is input to the processing stages of the inventive method.

A duration measure may be a single value out of a set of discrete - in particular binary - values or out of a set of continuous values. It may also be built up in a more complex way, for example as a vector.

It is further essential to generate and/or to output at least a first sequence of words which is most probably representative for said speech phrase. Of course, a variety or a set of candidates of sequences of words, in particular with differing probabilities, may be generated.

For each generated sequence of words being correspondent to said speech phrase, a confidence measure is generated and/or output. Said confidence measure is representative for the probability that the speech elements, the sequence of words and/or the speech phrase has been recognized correctly, and therefore that the candidate word sequence is the correct one. The confidence measure according to the inventive method is at least based on said duration measures for the speech elements and/or for said sub-sets/sub-sequences of speech elements.

According to the present invention the method preferably uses phones, phonemes, syllables, words, or the like, and/or sequences thereof as speech elements. Of course, phones or phonemes are the most elementary acoustical or speech fragments. They are followed in complexity by the so called syllables. The next step in complexity are the words and the combinations of words. Dependent on the complexity of the language model it is possible to assign to each of these realizations of speech elements the aforementioned duration measures or duration values. Generally, the duration of a word or of a syllable is as long as the sum of the durations of the constituting phones or phonemes.

In a preferred embodiment of the inventive method for recognizing speech prior to the recognition process, the duration model is constructed by recognizing given and pre-defined speech phrases as training data. During that particular training or learning phase known and pre-defined speech phrases are fed into the processing stage of the inventive method, with the method trying and/or forcing to recognize the correct transcription of the provided test phrases.

In a further preferred embodiment of the inventive method during the determination of the statistical distribution of the durations the boundaries of the correct speech elements corresponding to the training data are determined within said training data. Then the boundaries of the speech elements are used to estimate the durations of respective speech elements.

Furthermore, during the determination of said duration measures, statistical parameters for the distinct speech elements and/or for said sub-sets/sub-sequences of speech elements with respect to their duration distribution are calculated and/or are employed.

As mentioned above, the duration measures are representative for the compatibility of the durations of the speech elements and/or of said sub-sets/sub-sequences of speech elements with respect to the distinct duration model. Therefore, the distinct duration measures have to measure that particular compatibility in one sense or another.

According to a distinct embodiment of the inventive method the duration measures are set to a first predetermined value, if - and only if - the duration of the particular speech element and/or of the sub-set/sub-sequence of speech elements is compatible with a certain duration model and in particular is contained in a given and pre-defined percentile interval of the respective duration distribution. If the respective speech element and/or the sub-set/sub-sequence of speech elements is not compatible with said duration model and in particular is not contained in that particular percentile or confidence interval of the duration distribution, the particular duration measure is set to a second predefined value. The duration measures and therefore said first and second predetermined values may be discrete values and even binary high and low values such as 1 or 0. They may also fall into a range of continuous values representing the duration time itself - for example as a measurement value - or a probability measure.

For instance, the duration measure may be a binary signal having the value 1, if the particular duration is within the boundaries of the percentile interval and having the value 0, if it is below the lower percentile interval boundary or above the upper percentile interval boundary.

The inventive method for recognizing speech may use the following - in particular statistical - parameters at least when describing the properties of duration of the speech elements, namely the percentiles and/or intervals of percentiles of speech element durations, the number of speech elements in a word, sequence of words, or any section of an utterance, the number and/or duration of speech elements and/or sequences thereof being too short and/or too long with respect to the distinct duration model, absolute durations of speech elements as well as durations of speech elements normalized with respect to the speech rate or speaking rate, probabilities and other statistical entities of speech element durations. The probabilities of speech element durations and/or of sub-sets/sub-sequences of speech elements within said received speech phrase may follow from appropriate Gauss or Gamma statistical distributions, or they may be estimated from distinct histograms being created during the learning or training phase. Furthermore, statistical variances of the duration distribution within a given utterance may be employed. Also average duration differences in a sequence of speech elements may be evaluated.

According to a particular advantageous embodiment of the inventive method during the determination of the duration of the speech elements and/or of the sub-sets/sub-sequences of speech elements, the determined durations are corrected and/or normalized with respect to a speaking rate of the received speech phrase. This normalization and/or correction with respect to the speaking rate or speaking rate may be carried out locally, so that hesitations and de- and accelerations of the speaking person during a single utterance can be canceled out to improve the reliability of the recognized sequence of words representing the received speech phrase.

According to another preferred embodiment of the inventive method, each of said speech elements and/or each of said sub-sets/sub-sequences of speech elements may be classified as being rejected, if their respective duration measure indicates a lack of compatibility with the duration model. Therefore, even if the recognizing process detects for a section of the received speech phrase one or several speech elements which are compatible with respect to other properties of an acoustic model - for example with respect to the time dependent frequency spectrum - based on a duration compatibility check one or another candidate for the speech elements may be rejected as they do not fit to the acoustic or language model with respect to their duration distribution.

Therefore, according to a further preferred embodiment of the inventive method for recognizing speech, said sequence of words being representative for said speech phrase may be classified as being rejected at all, if said confidence measure of the sequence of words indicates that the number of speech elements and/or of said sub-sets/sub-sequences of speech elements being not compatible with respect to their duration model exceeds a given threshold number. That means that, if the number of rejected speech elements is too large, the detected sequence of words probably corresponding to said received speech phrase has to be rejected in its entirety.

If the recognizing process detected several candidates of sequences of hypothesis speech elements and/or of words corresponding to said received speech phrase, the best match can be singled out as the candidate having the less number of rejections with respect to the underlying duration model.

In the following, some aspects of the inventive method for recognizing speech are further elucidated.

In many applications of speech recognition, the problem of mis-recognition by far exceeds the problem of rejecting certain candidates for word sequences or utterances. In the case of a rejection, the rejected candidate for the sequence of words can be exchanged by another candidate for the sequence of words or it can be followed by a re-prompt so that the speaker has to repeat his utterance to be recognized. Also the use of confidence measures can be highly useful for the so called unsupervised speaker adaptation schemes.

The computation of confidence measures and therefore the duration compatibility check can be carried out by using two distinct strategies, namely the one-pass strategy or the two-pass strategy.

In the two-pass recognition/verification or post-processing scheme or strategy, a confidence measure for the hypothesized word sequence or utterance is computed in a post-processing step which follows the recognizing stage, i. e. when a certain candidate for the word sequence or utterance has been found. This has the particular disadvantage that the post-processing stage has to rely on a probably error prone segmentation of the recognizing stage.

In contrast, in the one-pass strategy, the decoding criterion itself is modified and the duration compatibility check is carried out during recognition, such that the decoded string or candidate for the word sequence is - as mentioned above - that particular one which obtains the highest confidence score with respect to all possible sequences of speech elements, word sequences, strings, or the like. The test in that case is not applied to a single string, but to all possible candidate strings.

The two strategies may involve threshold comparison tests, rule based systems and/or statistical classificators and the latter of which may employ decision trees, neural networks, nearest neighbour classificators or the like.

Additionally, a special training can be applied to the method to maximize the ability of discrimination between the models.

The parameters for the confidence measures in accordance with the inventive method may include the statistical means, the variances, the root mean square, and distinct percentiles or percentile intervals. During that particular percentiles, the 0.01, 0.1, 1, 5, 50 - the median of the probe - 95, 99, and 99.9 percentiles of the elements or phones length or duration distribution may be employed. The percentile k - in particular for k = 0.1, ..., 99.9 - for a given statistical distribution F(x) is defined as a value $\eta_k$ which satisfies the relation $F(\eta_k) = 0.01\ k$.

During the recognition phase, the time-alignment is carried out for each recognized word, word sequence, or utterance fragment. The durations of the recognized speech elements or phones determined on this time-alignment are compared with previously calculated statistics. In the case of a significant deviation - i. e. in the case where the measured value exceeds a chosen percentile or is outside a given percentile interval where the percentiles are chosen in dependence on the postulated rejection level - these are then marked as being rejected or erroneous.

By using different percentiles, the rejection level can be adjusted. If a smaller percentile is chosen for marking erroneous phones or erroneous speech elements, more phones or elements are marked, thus increasing the rejection rate. On the other hand, if a larger percentile is used, more speech elements or phones will be accepted by the method and thus the rejection rate will be lower. Depending on the speaking rate or speaking rate, the durations of the phones or speech elements may vary and therefore influence the confidence measure. To cancel out these effects, the durations of the recognized speech elements or phones may be corrected and/or normalized with respect to the speaking rate or speaking rate.

A simple speaking rate approximation which can be used to cancel out the effect of speaking rate may be defined by the relation

$$\alpha = \frac{1}{N} \sum_{i=1}^{N} \frac{d_i}{\overline{x}_p},$$

where N denotes the number of speech elements or phones within the observed utterance and/or in the past few utterances, $d_i$ is the duration of the $i^{th}$ speech element or phone segment - recognized as phone p - in the utterance and $\overline{x}_p$ is the mean length of the corresponding phone p learned during the training.

If the number of erroneous segments or speech elements exceeds a predetermined threshold, the utterance is rejected. That means for an isolated word recognizer that, if in the recognized word or utterance there are too many speech elements or phones which are of false length or duration, the word or utterance will be rejected. Additionally, the sequence of significantly too long or too short segments or speech elements are searched and the number is taken into account by formulation of an CM-hypothesis. For this purpose, the standardized values z of durations x are used.

$$z = \frac{x - \overline{x}}{s}$$

where $\overline{x}$ is the population mean of the duration of a given speech element or phone and s is its standard deviation.

As shown above, the following quantities are used to describe the duration of the speech elements of phones: percentiles or phone durations - all percentiles can be used simultaneously or individually - the number of phones in a word, the number and the duration of too short/too long sequences of speech elements or phones, the absolute durations of speech elements or phones as well as the duration of speech elements or phones normalized and corrected for the speaking rate, the probabilities of phone durations following from appropriate Gauss or Gamma statistical distributions or being estimated from histograms learned during the training phase, statistical variances of the duration distribution in the utterance, and averaged duration differences in the sequences of speech elements or phones.

The feature cf the new and inventive method with respect to the confidence measures may be combined with traditional confidence measures.

As a result of the new and inventive method for recognizing speech, traditional application of confidence measures will be refined by incorporating the speech element or phone duration matching.

In the presented approach, the speech element or phone can be a phoneme as used in the pronunciation lexika or a context-dependent phone symbol or a state of a Hidden Markov Model (HMM-state). The context of the speech element or phone is here understood as a dependence on the neighborhood elements or phones, the position in a word or sequences of words, the type of word - i. e. function word, verb, ... - all the positions in a sentence or in an utterance.

The inventive method for recognizing speech will be explained by means of a schematical drawing on the basis of preferred embodiments of the inventive method, in which

Fig. 1     shows a block diagram which represents a preferred embodiment of the inventive method for recognizing speech,

Fig. 2     is a block diagram which elucidates some details of the data processing of the embodiment of Fig. 1, and

Fig. 3     demonstrates the result of intermediate steps of the recognition process according to the embodiment of Fig. 1.

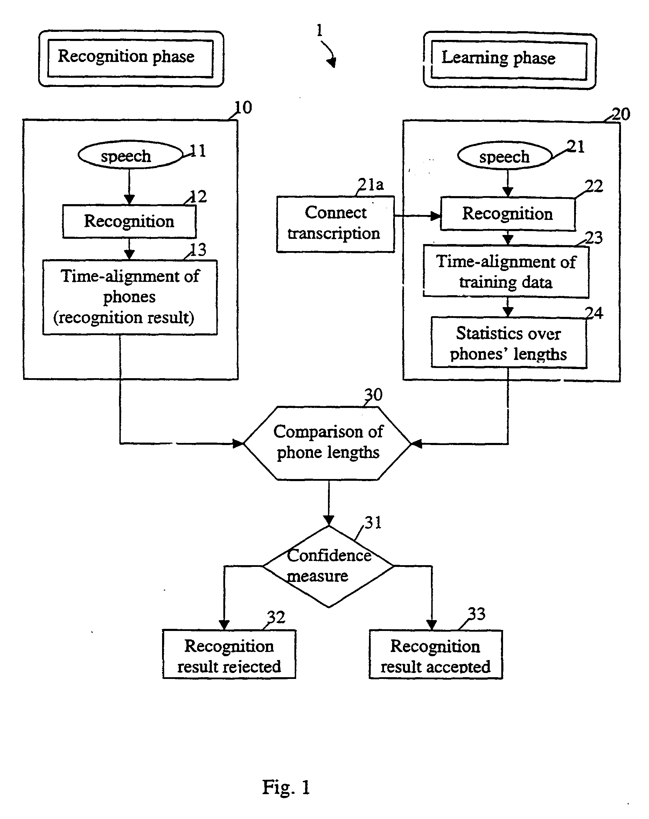

The block diagram of Fig. 1 demonstrates the different steps of an embodiment of the inventive method 1 for recognizing speech. Prior to the recognition phase 10 a learning or training phase 20 is carried out by the inventive method 1 for recognizing speech. During the learning and training phase 20 in steps 21 and 21a the given speech phrase and the respective correct transcription of the given speech phrase are input to the recognizing process 22. After the step of recognition 22 the data of the correct transcription are assigned to the given speech phrase by time-alignment of the training data in step 23. In step 24 of the learning phase 20 from the time-alignment 23 of the training data statistics and the statistic evaluation over the lengths or durations of the distinct speech elements or phones are extracted. The result of the statistics and the statistical evaluation are fed to a comparison module 30.

After training within the training or learning phase 20, the inventive method 1 may carry out a recognition phase 10. First of all in step 11 of the recognition phase 10, a unknown speech phrase is received in step 11 and then input into the recognition stage 12. After recognizing the input speech phrase, the durations or lengths of the recognized result are extracted in step 13 of the recognition phase 12. again by a time-alignment process 13 of the speech elements or phones within the recognition result. The result of the extraction of phone durations is then input to the comparison module 30.

Comparison module 30 compares the actual durations determined from the unknown speech input for each speech element or phone with respect to the statistical distributions obtained during the learning phase 20.

The result of the comparison in step 30 is then fed to the confidence measure construction step 31. In this example of the inventive method 1 the recognition result is rejected in step 32, if the confidence measure of step 31 is not sufficient to represent a reliable recognition result. On the other hand, if the confidence measure of step 31 is sufficient to characterize the recognized result as being reliable for said speech input, the recognition result is accepted in step 33 and then further processed.

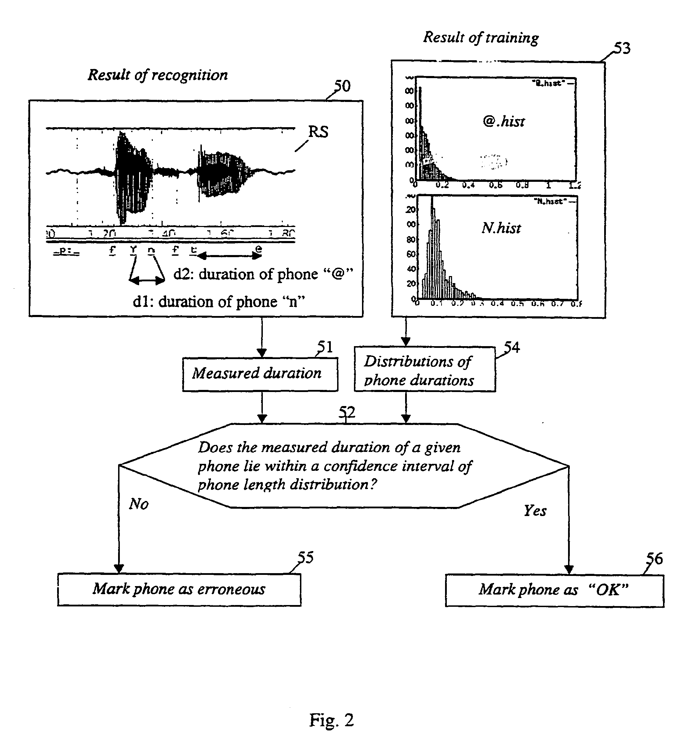

In the block diagram of Fig. 2 details of the comparison process 30 of the embodiment of Fig. 1 are described.

As a result of the training or learning phase 20 for each possible speech element or phone, the frequencies of the durations of the distinct phones are collected in step 53. From the collection of the frequencies of the durations of the distinct phones, statistical distributions of the phone durations and other statistical data are extracted in step 54 and then fed into the comparison section of step 52.

In step 52 the theoretical statistical distributions and other statistical data of step 54 are compared with the actual measured durations. It is checked on whether or not the measured durations for the given phone or speech element lays within a confidence interval of the phone length distribution. If the duration of the distinct phone lays in the outside of the respective confidence interval, this distinct phone is marked as being erroneous in step 55. On the other hand, if the duration of the distinct phone falls within said confidence interval, it is marked as being accepted or as being okay in step 56.

In the recognition step 50 from a representing signal RS - in that particular case represented by a time dependent spectrum - distinct phones or speech elements are recognized and their durations d1 and d2 are extracted from the time evolution of the time dependent spectrum of the representing signal RS. In step 51 the actual durations d1 and d2 are extracted from the spectrum of the representing signal RS.

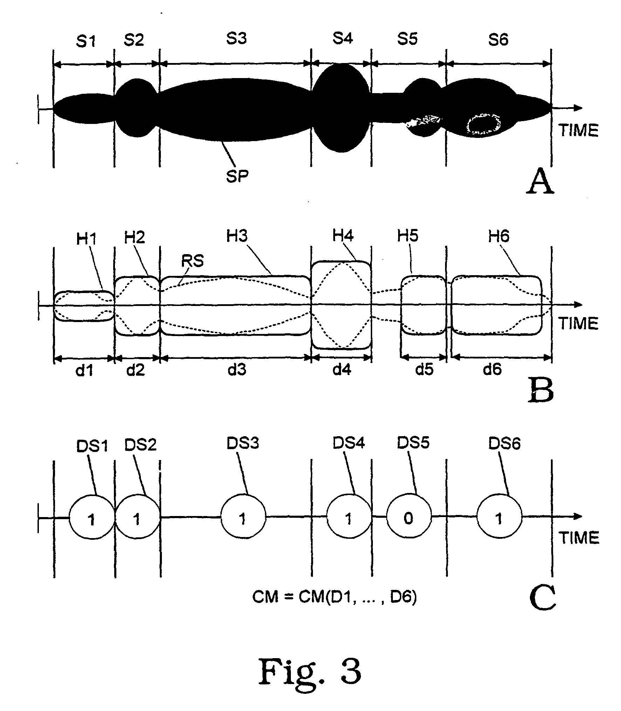

In Fig. 3 results of intermediate steps A to C of the recognizing process are shown.

Section A of Fig. 3 shows in a schematical way as a time-dependent sound amplitude an utterance or speech phrase SP which is formed by a sequence of speech elements S1 to S6.

Section B shows the time evolution of the representing signal RS. Also in section 3B speech elements H1 to H6 are included as hypotheses for being representative for the respective actual or correct speech elements S1 to S6. In the time evolution of the representing signal RS, also the durations d1 to d6 of the respective speech elements H1 to H6 are indicated.

In section C it is demonstrated that for each duration d1 to d6 a distinct duration measure DS1 to DS6 is assigned. The duration measures DS1 to DS6 depend on the statistical evaluation of the training data. In that particular case of Fig. 3C, the duration measures DS1 to DS6 are binary signals having a value 1, if the duration d1 to d6 of respective speech elements H1 to H6 is contained within a confidence interval of the statistical duration distribution of the respective actual speech elements or phone S1 to S6. If the durations d1 to d6 lay outside the respective confidence interval, the respective duration measure DS1 to DS6 obtain the value 0. As a result, the confidence measure CM is calculated or determined as a function at least of the duration measures DS1 to DS6.

In the example of Fig. 3, duration d5 for phone H5 is too short, therefore H5 is not the correct transcription of S5. DS5 has the value 0 and therefore indicates that H5 has to be rejected.

## Claims

1. Method for recognizing speech comprising the steps of:

    a) receiving a speech phrase (SP),
    b) generating a representing signal (RS) which is representative for said speech phrase (SP),
    c) determining from said representing signal (RS) at least a first sequence of speech elements (H1, ..., H6) out of a set of given possible speech elements (S1, ..., Sn, ...),
    d) generating for each speech element (H1, ..., H6) or for sub-sets/sub-sequences of said speech elements (H1, ..., H6) a duration measure (DS1, ..., DS6),
    e) generating at least a first sequence of words from said speech elements (H1, ..., H6) which most probably correspond to said speech phrase (SP), and
    f) generating a confidence measure (CM) which is at least based on said duration measures (DS1, ..., DS6) and which is representative for the probability of a correct recognition of said speech elements (H1, ..., H6) or said sequence of words

        - wherein each of said duration measures (DS1, ..., DS6) comprises information at least on whether or not said speech elements (H1, ..., H6) or said sub-sets/sub-sequences of speech elements (H1, ..., H6) within said representing signal of (RS) are compatible to a given and pre-defined duration model,
        - wherein prior to recognition a statistical distribution of the duration for each of said possible speech elements (S1, ..., Sn, ...) or of sequences thereof is determined and analyzed,
        - wherein said analysis is included into said duration model, and
        - wherein said determination of the statistical distributions of the durations is based on a forced time alignment process of training data.

2. Method according to claim 1.
   wherein one or an arbitrary plurality of items of the group consisting of phones, phonemes, syllables and words are used as speech elements (H1.... H6).

3. Method according to any one of the preceding claims,
   wherein prior to recognition the duration model is constructed by recognizing given and pre-defined speech phrases as training data.

**4.** Method according to any one of the preceding claims,

> - wherein during the determination of the statistical distribution of the durations the training data are provided as an input speech signal together with the correct transcription thereof and
> - wherein then the recognizing process is forced to recognize the correct transcription.

**5.** Method according to any one of the preceding claims,
wherein during the determination of the statistical distributions of the durations the boundaries of the correct speech elements within said training data are determined and then used to estimate the durations of the respective speech elements.

**6.** Method according to any one of the preceding claims,
wherein for generating said duration measures (DS1, ..., DS6) statistical parameters of said speech elements (H1, ..., H6) or of sub-sets/sub-sequences of speech elements (H1, ..., H6) with respect to their duration distributions are calculated and employed.

**7.** Method according to any one of the preceding claims,

> - wherein the duration measures (DS1, ..., DS6) are set to a first predetermined value, if - and only if - the duration of the speech elements (H1, ..., H6) or of sub-sets/sub-sequences of speech elements (H1, ..., H6) is contained in a given and pre-defined percentile interval of the respective statistical duration distribution, and
> - wherein they are set to a second predetermined value otherwise.

**8.** Method according to any one of the preceding claims,
wherein the generation of the confidence measure (CM) employs one or an arbitrary plurality of the quantities of the group consisting of percentiles of the respective speech elements (H1, ..., H6), percentile durations of the respective speech elements (H1, ..., H6), the number of speech elements in a word, the number of sequences of speech elements being too short or too long, the durations of sequences of speech elements being too short or too long, the absolute durations of speech elements, probabilities of speech element durations, variances of probabilities of speech element durations, and averages of probabilities of speech element durations.

**9.** Method according to any one of the preceding claims,
wherein during the determination of the speech elements (H1, ..., H6) or of the sub-sets/sub-sequences of speech elements (H1, ..., H6) the determined duration is corrected with respect to a speaking rate of the received speech phrase (SP).

**10.** Method according to any one of the preceding claims,
wherein each of said speech elements (H1, ..., H6) or each of said sub-sets/sub-sequences of speech elements (H1, ..., H6) is classified as being rejected, if their respective duration measures (DS1, ..., DS6) indicate a lack of compatibility.

**11.** Method according to any one of the preceding claims,
wherein said sequence of words is classified as being rejected, if said confidence measure (CM) indicates that the number of speech elements (H1, ..., H6) or of said sub-sets/sub-sequences of speech elements (H1, ..., H6) being not compatible with said duration model exceeds a given threshold number.

**Patentansprüche**

**1.** Verfahren zur Erkennung von Sprache,
mit den Schritten:

> a) Empfangen einer Sprachphrase (SP),
> b) Erzeugen eines repräsentierenden Signals (RS), welches für die Sprachphrase (SP) repräsentativ ist,
> c) Bestimmen mindestens einer ersten Sequenz von Sprachelementen (H1, ..., H6) aus einer Menge gegebener möglicher Sprachelemente (S1, ..., Sn, ...) aus dem repräsentierenden Signal (RS),
> d) Erzeugen eines Zeitdauermaßes (DS1, ..., DS6) für jedes Sprachelement (H1, ..., H6) oder für Untermengen/Unterfolgen der Sprachelemente (H1, ..., H6),
> e) Erzeugen mindestens einer Folge von Wörtern aus den Sprachelementen (H1, ..., H6), die am wahrscheinlichsten mit der Sprachphrase (SP) korrespondieren, und
> f) Erzeugen eines Vertrauensmaßes (CM), welches zumindest auf den Zeitdauermaßen (DS1, ..., DS6) basiert und welches repräsentativ ist für die Wahrscheinlichkeit einer korrekten Erkennung eines Sprachelements (H1, ..., H6) oder der Folge von Wörtern,

> > - wobei jedes der Zeitdauermaße (DS1, ..., DS6) Informationen enthält zumindest in Bezug darauf, ob die Sprachelemente (H1, ..., H6) oder Untermengen/Unterfolgen von Sprachelementen (H1, ..., H6) innerhalb des repräsentierenden Signals (RS) kompatibel sind zu einem gegebenen und vordefinierten Zeitdauermodell.

- wobei vor der Erkennung eine statistische Verteilung der Zeitdauer für jedes mögliche Sprachelement (S1, ..., Sn, ...) oder für Folgen davon bestimmt und analysiert wird,

- wobei diese Analyse in das Zeitdauermodell aufgenommen wird und

- wobei das Bestimmen der statischen Verteilungen für die Zeitdauer gegründet wird auf einen erzwungenen Zeitanordnungs- oder forced-time-alignment-Prozess in Bezug auf Trainingsdaten.

2. Verfahren nach Anspruch 1,
bei welchem ein oder eine beliebige Mehrzahl von Elementen aus der Gruppe, die aus Phonen, Phonemen, Silben und Wörtern besteht, als Sprachelemente (H1, ..., H6) verwendet werden.

3. Verfahren nach einem der vorangehenden Ansprüche,
bei welchen vor der Erkennung das Zeitdauermodell konstruiert wird durch Erkennen gegebener und vordefinierten Sprachphrasen als Trainingsdaten.

4. Verfahren nach einem der vorangehenden Ansprüche,

   - bei welchem während der Bestimmung der statistischen Verteilung der Zeitdauer die Trainingsdaten als ein Eingangsprachsignal zusammen mit ihrer korrekten Transkription bereitgestellt werden und

   - bei welchem dann der Erkennungsprozess gezwungen wird, die korrekte Transkription zu erkennen.

5. Verfahren nach einem der vorangehenden Ansprüche,
bei welchem während der Bestimmung der statistischen Verteilungen der Zeitdauer die Randwerte für die korrekten Sprachelemente innerhalb der Trainingsdaten ermittelt und dann verwendet werden, um die Zeitdauer der jeweiligen Sprachelemente zu bestimmen.

6. Verfahren nach einem der vorangehenden Ansprüche,
bei welchem für das Erzeugen der Zeitdauermaße (DS1, ..., DS6) statistische Parameter für die Sprachelemente (H1, ..., H6) oder für Untermengen/Unterfolgen von Sprachelementen (H1, ..., H6) in Bezug auf deren Zeitdauerverteilungen berechnet und verwendet werden.

7. Verfahren nach einem der vorangehenden Ansprüche,

   - bei welchem die Zeitdauermaße (DS1, ..., DS6) dann und nur dann auf einen ersten vorbestimmten Wert eingestellt werden, wenn die Zeitdauer für die Sprachelemente (H1, ..., H6) oder für die Untermengen/Unterfolgen von Sprachelementen (H1, ..., H6) in einem gegebenen und vorgegebenen Percentilintervall der jeweiligen statistischen Zeitdauerverteilung enthalten ist, und

   - bei welchem sie ansonsten auf einen zweiten vorbestimmten Wert gesetzt werden.

8. Verfahren nach einem der vorangehenden Ansprüche,
bei welchem das Erzeugen des Vertrauensmaßes (CM) ein oder eine beliebige Mehrzahl von Größen verwendet aus der Gruppe, die besteht aus Percentilen der jeweiligen Sprachelemente (H1, ..., H6), Percentilzeitdauerwerte der jeweiligen Sprachelemente (H1, ..., H6), die Anzahl der Sprachelemente in einem Wort, die Anzahl der Folgen von Sprachelementen, die zu kurz oder zu lang sind, die Zeitdauerwerte für Folgen von Sprachelementen, die zu kurz oder zu lang sind, die absoluten Zeitdauerwerte von Sprachelementen, die Wahrscheinlichkeiten von Sprachelementzeitdauerwerten, die Varianzen von Wahrscheinlichkeiten von Sprachelementzeitdauerwerten und die Mittelwerte von Wahrscheinlichkeiten von Sprachelementzeitdauerwerten.

9. Verfahren nach einem der vorangehenden Ansprüche,
bei welchem während der Bestimmung der Sprachelemente (H1, ..., H6) oder der Untermengen/Unterfolgen von Sprachelementen (H1, ..., H6) die bestimmte Zeitdauer in Bezug auf die Sprachrate der empfangenen Sprachphrase (SP) korrigiert wird.

10. Verfahren nach einem der vorangehenden Ansprüche,
bei welchem jedes der Sprachelemente (H1, ..., H6) oder jede der Untermengen/Unterfolgen von Sprachelementen (H1, ..., H6) als zurückgewiesen klassifiziert wird, falls deren jeweilige Zeitdauermaße (DS1, ..., DS6) einen Mangel an Kompatibilität anzeigen.

11. Verfahren nach einem der vorangehenden Ansprüche,
bei welchem die Folge von Wörtern als zurückgewiesen klassifiziert wird, falls das Vertrauensmaß (CM) anzeigt, dass die Anzahl der Sprachelemente (H1, ..., H6) oder der Untermengen/Unterfolgen von Sprachelementen (H1, ..., H6), die nicht kompatibel ist mit dem Zeitdauermodell, eine gegebene Schwellanzahl übersteigt.

## Revendications

**1.** Procédé de reconnaissance de la parole, comprenant les étapes consistant à :

a) recevoir un syntagme de parole (SP),

b) générer un signal représentatif (RS) qui est représentatif dudit syntagme de parole (SP),

c) déterminer à partir dudit signal représentatif (RS) au moins une première séquence d'éléments de parole (H1, ..., H6) à partir d'un ensemble d'éléments de parole possibles donnés (S1, ..., Sn, ...),

d) générer pour chaque élément de parole (H1, ..., H6) ou pour des sous-ensembles/sous-séquences desdits éléments de parole (H1, ..., H6) une mesure de durée (DS1, ..., DS6),

e) générer au moins une première séquence de mots à partir desdits éléments de parole (H1, ..., H6) qui correspond le plus probablement audit syntagme de parole (SP), et

f) générer une mesure de niveau de confiance (CM) qui est au moins fondée sur lesdites mesures de durées (DS1, ..., DS6) et qui est représentative de la probabilité d'une reconnaissance correcte desdits éléments de parole (H1, ..., H6) ou de ladite séquence de mots,

- dans lequel chacune desdites mesures de durées (DS1, ..., DS6) comprend des informations au moins sur le fait que lesdits éléments de parole (H1, ..., H6) ou lesdits sous-ensembles/sous-séquences d'éléments de parole (H1, ..., H6) au sein dudit signal représentatif (RS) sont compatibles ou non avec un modèle de durée donné et prédéfini,

- dans lequel avant la reconnaissance, une distribution statistique de la durée pour chaque élément parmi lesdits éléments de parole possibles (S1, ..., Sn, ...) ou de leurs séquences est déterminée et analysée,

- dans lequel ladite analyse est incluse dans ledit modèle de durée, et

- dans lequel ladite détermination des distributions statistiques des durées est fondée sur un traitement d'alignement dans le temps forcé de données d'apprentissage.

**2.** Procédé selon la revendication 1, dans lequel un élément ou une pluralité arbitraire d'éléments du groupe constitué de phones, de phonèmes, de syllabes et de mots sont utilisés comme éléments de parole (H1, ..., H6).

**3.** Procédé selon l'une quelconque des revendications précédentes, dans lequel, avant la reconnaissance, le modèle de durée est construit en reconnaissant des syntagmes de parole donnés et prédéfinis comme données d'apprentissage.

**4.** Procédé selon l'une quelconque des revendications précédentes,

- dans lequel, au cours de la détermination de la distribution statistique des durées, les données d'apprentissage sont fournies sous la forme d'un signal vocal d'entrée en même temps que sa transcription correcte et

- dans lequel le traitement de reconnaissance est alors forcé à reconnaître la transcription correcte.

**5.** Procédé selon l'une quelconque des revendications précédentes, dans lequel, au cours de la détermination des distributions statistiques des durées, les limites des éléments de parole corrects à l'intérieur desdites données d'apprentissage sont déterminées et ensuite utilisées pour estimer les durées des éléments de parole respectifs.

**6.** Procédé selon l'une quelconque des revendications précédentes, dans lequel, pour générer lesdites mesures de durées (DS1, ..., DS6), des paramètres statistiques desdits éléments de parole (H1, ..., H6) ou desdits sous-ensembles/sous-séquences d'éléments de parole (H1, ..., H6) par rapport à leurs distributions de durées sont calculés et employés.

**7.** Procédé selon l'une quelconque des revendications précédentes,

- dans lequel les mesures de durées (DS1, ..., DS6) sont établies à une première valeur prédéterminée, si, et seulement si, la durée des éléments de parole (H1, ..., H6) ou des sous-ensembles/sous-séquences d'éléments de parole (H1, ..., H6) est contenue dans un intervalle de centile prédéfini de la distribution de durées statistique respective, et

- dans lequel elles sont établies sinon à une deuxième valeur prédéterminée.

**8.** Procédé selon l'une quelconque des revendications précédentes, dans lequel la génération de la mesure de niveau de confiance (CM) emploie une quantité ou une pluralité arbitraire des quantités du groupe constitué des centiles des éléments de parole respectifs (H1, ..., H6), des durées de centiles des éléments de parole respectifs (H1, ..., H6), du nombre d'éléments de parole dans un mot, du nombre de séquences d'éléments de parole qui sont trop courts ou trop longs, des durées de séquences d'éléments de parole qui sont trop courts ou trop longs, des durées absolues d'éléments de parole, des probabilités de durées d'éléments de parole, des variances des probabilités des durées d'éléments de parole, et des moyennes des probabilité de durées d'éléments de parole.

9. Procédé selon l'une quelconque des revendications précédentes,
dans lequel, au cours de la détermination des éléments de parole (H1, ..., H6) ou des sous-ensembles/sous-séquences d'éléments de parole (H1, ..., H6), la durée déterminée est corrigée par rapport à un débit d'élocution du syntagme de parole reçu (SP).

10. Procédé selon l'une quelconque des revendications précédentes,
dans lequel chacun desdits éléments de parole (H1, ..., H6) ou chacun desdits sous-ensembles/sous-séquences d'éléments de parole (H1, ..., H6) est classé comme étant rejeté, si leurs mesures de durées respectives (DS1, ..., DS6) indiquent une absence de compatibilité.

11. Procédé selon l'une quelconque des revendications précédentes,
dans lequel ladite séquence de mots est classée comme étant rejetée, si ladite mesure de niveau de confiance (CM) indique que le nombre d'éléments de parole (H1, ..., H6) ou desdits sous-ensembles/sous-séquences d'éléments de parole (H1, ..., H6) qui ne sont pas compatibles avec ledit modèle de durée dépasse un nombre seuil donné.

Fig. 1

*Result of recognition*

*Result of training*

50

53

RS

@.hist

N.hist

d2: duration of phone "@"

d1: duration of phone "n"

| 51 |
|----|
| *Measured duration* |

| 54 |
|----|
| *Distributions of phone durations* |

52

*Does the measured duration of a given phone lie within a confidence interval of phone length distribution?*

*No*

*Yes*

55

56

| *Mark phone as erroneous* |

| *Mark phone as "OK"* |

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5857173 A